# FASCICULE DE BREVET EUROPEEN

(11) **EP 0 775 605 B1**
(45) Date de publication et mention de la délivrance du brevet: **11.08.1999**
(21) Numéro de dépôt: 96402482.2
(22) Date de dépôt: 19.11.1996
(51) Int. Cl.: B60J 1/20

(54) **Store pare-soleil à mécanisme de déploiement par bielletes pivotantes**
Sonnenschutzrolle mit Entfaltungsmechanismus durch Schwungstangen
Roller-blind with deployment mechanism having swinging links

(30) Priorité: 27.11.1995 FR 9514013; 10.06.1996 FR 9607159
(43) Date de publication de la demande: 28.05.1997
(73) Titulaire: WAGON AUTOMOTIVE SNC, 79300 Bressuire (FR)
(72) Inventeur: Cousson, François, 79430 La Chapelle St-Laurent (FR)
(74) Mandataire: Vidon, Patrice

(56) Documents cités:
- EP-A- 0 240 747
- EP-A- 0 394 124
- EP-A- 0 538 106
- FR-A- 2 588 307
- US-A- 5 201 810

## Description

La présente invention concerne un store pare-soleil selon les caractéristiques du préambule de la revendication 1 connues du EP-A-538 106 et destiné à être déployé devant une baie galbée, notamment une lunette arrière de véhicule.

Un tel store comporte en général une toile enroulée autour d'un cylindre de rangement qui est logé dans un boîtier, l'extrémité libre de la toile étant équipée d'une barre de tirage. Dans certains cas, la manoeuvre du store se fait manuellement en extrayant la toile du boîtier au travers d'une fente rectiligne. Cette manoeuvre peut également être motorisée et dans ce cas, des biellettes sont mises en oeuvre entre le boîtier et la barre de tirage. Ces biellettes peuvent être motrices, c'est-à-dire accouplées à un organe moteur commandé, le cylindre agissant comme un enrouleur de rappel, ou peuvent être élastiquement résistantes au reploiement de la toile qui s'effectue au moyen d'un moteur d'enroulement accouplé au cylindre de rangement.

Le problème à résoudre avec ce genre de store est qu'en position déployée, il épouse aussi bien que possible le galbe de la baie qu'il occulte. On a déjà proposé des stores à barre de tirage cintrée, ce qui demande de réaliser une fente de sortie du boîtier pour la toile également cintrée. Ceci présente l'inconvénient d'une fente importante donc moins discrète qu'une fente rectiligne surtout lorsque celle-ci est ménagée dans la tablette arrière d'un véhicule et confère à la toile des contraintes importantes en la forçant à s'incurver tout de suite après le rouleau de rangement.

Une autre solution a consisté à prévoir des biellettes de déploiement du store de formes particulières pour que, lorsque ces biellettes sont repliées, la barre de tirage appartienne à un plan unique dans lequel est placée chaque extrémité de biellettes qui est articulée à la barre de tirage et lorsque ces biellettes sont déployées, le plan de chaque extrémité de biellettes soit distinct de l'autre, si bien que la barre de tirage est cintrée entre ces plans. L'inconvénient de cette solution réside dans le fait que lors du déploiement du store, il faut développer non seulement un effort d'extraction de la toile mais également un effort de cintrage de la barre, ce qui conduit à une usure prématurée des mécanismes.

Par ailleurs, il est souhaité que, le store déployé, la barre de tirage soit plaquée en appui contre la baie qu'elle occulte de manière à supprimer tout bruit résultant des vibrations auxquelles est soumis le mécanisme de déploiement qui engendre des oscillations de la barre de tirage conduisant à des chocs répétés de celle-ci contre la baie. Ce contact doit cependant n'intervenir qu'à la fin du déploiement pour éviter que la barre de tirage frotte le long de la baie pendant le déploiement, ce qui est une source de bruit et d'usure à éviter.

Par la présente invention, on entend remédier aux inconvénients des dispositifs connus.

A cet effet, l'invention a donc pour objet un store pare-soleil, comme défini dans la revendication 1, comportant une toile enroulée autour d'un cylindre de rangement et possédant une extrémité libre équipée d'une barre de tirage reliée à un support par au moins un mécanisme à biellettes déployables, articulé entre le support et la barre de tirage pour un déploiement et reploiement de la toile dans une surface sensiblement plane, la barre de tirage étant maintenue parallèle à elle-même. Plus précisément, chaque mécanisme du store selon l'invention comporte une biellette articulée au support au moyen d'un pivot qui porte l'axe d'articulation de la biellette et qui est porté à pivotement par le support autour d'un axe orthogonal à l'axe d'articulation de la biellette, le support comportant une came fixe sur laquelle la biellette prend appui pour entraîner en pivotement le pivot autour de son axe de pivotement lors de la phase finale de déploiement du store et pour, en conséquence, modifier l'orientation de la biellette par rapport au plan de déploiement du store.

Par ces dispositions, lorsque les biellettes se déploient, elles évoluent dans un plan qui est sensiblement perpendiculaire à leur axe d'articulation sur le pivot. A la fin du mouvement de déploiement, comme chaque biellette rencontre une résistance à son pivotement autour de son axe d'articulation, la came sur laquelle elle prend appui constitue le moyen, si on persiste dans l'effort de déploiement, par lequel l'ensemble biellette et pivot portant l'axe d'articulation est forcé de tourner autour de l'axe de pivotement du pivot dans le support. Les axes d'articulation des biellettes qui étaient au départ fixes, parallèles et perpendiculaires au plan de débattement principal de ces biellettes, vont alors avoir leur orientation modifiée.

Selon la position de l'axe du pivot dans le plan perpendiculaire à l'axe d'articulation des biellettes sur le pivot, on peut obtenir plusieurs effets. Si l'axe du pivot est parallèle à la barre de tirage, l'action de la came en forme de rampe se traduit par une rotation du plan de débattement des biellettes autour de l'axe du pivot : la barre peut alors être plaquée contre la baie en fin de déploiement. Si l'axe du pivot est orthogonal à la barre de tirage, celle-ci étant élastiquement déformable dans une direction perpendiculaire à la toile et si la came constitue une butée fixe d'appui pour les biellettes, en fin de déploiement, les axes d'articulation des biellettes au pivot sont contraints de diverger, entraînant ainsi une rotation de chaque biellette sur elle-même et un cintrage de la barre de tirage.

Ce cintrage n'est réalisé qu'en fin de course. Lorsque le store est déployé de manière automatique par manoeuvre des biellettes, on s'arrange, de manière connue, pour que la barre de tirage prenne appui sur la baie à occulter et glisse le long de celle-ci. Avec une biellette cintrée ou cintrable de manière progressive conformément à l'art antérieur, cet appui est réalisé le long d'une partie non négligeable de la barre de tirage, ce qui crée des forces de frottement à surmonter en plus des forces nécessaires au déploiement du store et, en même temps, entraîne la formation de traces sur la baie par ce frottement étendu.

Grâce à ce mode de réalisation de l'invention, l'appui de la barre de tirage contre la baie lors du déploiement s'opère uniquement par ses deux extrémités puisque cette barre de tirage est conservée rectiligne jusqu'à la fin du déploiement.

Enfin, si l'axe du pivot est incliné par rapport à la barre de tirage, celle-ci étant élastiquement déformable et la came formant une butée fixe pour les biellettes comme précédemment, lors du pivotement du pivot en plus de leur rotation sur elles-mêmes, les biellettes décrivent un cône qui se traduit par un mouvement du plan de la toile que l'on peut prévoir pour qu'il soit en direction de la baie à occulter. Ainsi cette réalisation cumule-t-elle les deux avantages des deux réalisations précédentes et on peut prévoir le déploiement de la toile en dehors de tout contact de celle-ci avec la baie et, au moment du cintrage de la barre, engendrer un déplacement du plan de la toile pour venir plaquer la barre contre la baie.

D'autres caractéristiques et avantages de l'invention ressortiront de la description donnée ci-après d'un de ses modes de réalisation avec l'une de ses variantes.

Il sera fait référence aux dessins annexés parmi lesquels:
- la figure 1 est une vue schématique partielle d'un store conforme à l'invention ;
- la figure 2 est l'illustration d'un premier mode de réalisation de l'articulation du pied d'une biellette mise en oeuvre dans le store de l'invention à l'état replié,
- la figure 3 illustre schématiquement la réalisation de la figure 2 dans l'état déployé du store,
- les figures 4 et 5 illustrent par des figures semblables aux figures 2 et 3 un second mode de réalisation de l'articulation du pied d'une biellette,
- la figure 6 est une vue schématique d'un troisième mode de réalisation du store selon l'invention.

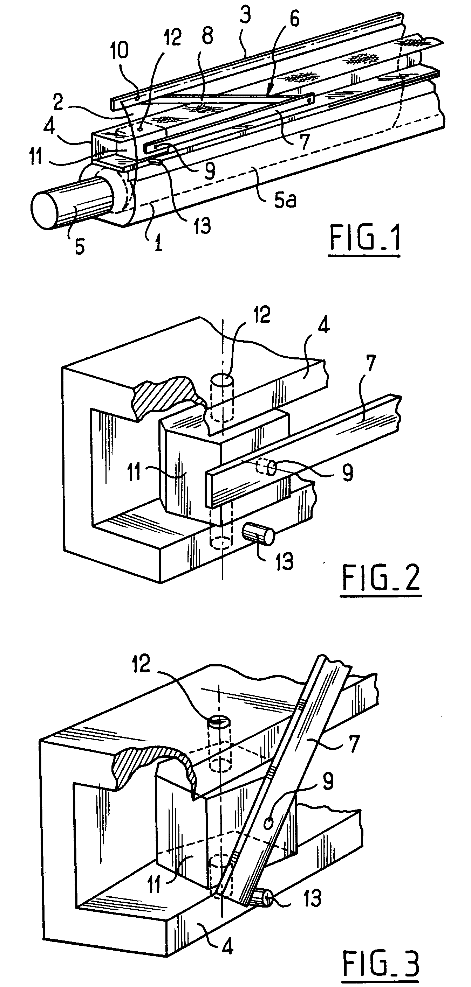

A la figure 1, on a représenté un boîtier de store 1 duquel sort une toile 2 attelée à une barre de tirage 3. Ce boîtier comporte un support 4 représenté de manière simplifiée sous la forme d'un profilé en C. Le boîtier comporte également un moteur 5 d'entraînement d'un cylindre 5a d'enroulement de la toile à l'intérieur du boîtier.

Deux mécanismes tels que 6 de biellettes relient la barre de tirage 3 au support 4. Le mécanisme non représenté à la figure est symétrique de celui représenté par rapport à un plan médian perpendiculaire à l'axe du cylindre 5a. Dans le cas de la figure 1, chaque mécanisme comporte une biellette de pied 7 et une biellette de tête 8, ces biellettes étant articulées entre elles. La biellette 7 est articulée au support autour d'un axe 9 tandis que la biellette 8 est articulée à la barre de tirage 3 autour d'un axe 10. Il est prévu un mécanisme moteur tendant à aligner les biellettes 7 et 8. Ce mécanisme moteur sera de préférence un mécanisme élastique agissant au niveau des articulations des biellettes entre elles ou au niveau de leur articulation à la barre de tirage ou du support. Dans certains cas il est même envisageable de motoriser l'articulation de la biellette de pied, le moteur 5 se résumant par exemple à un ressort d'enroulement de la toile.

L'invention peut également concerner d'autres mécanismes de déploiement du store dans lesquels les biellettes sont arrangées différemment. Par exemple il est possible de ne mettre en oeuvre qu'une seule biellette entre le support et la barre de tirage, la liaison entre cette biellette et la barre étant par exemple coulissante. Dans certains cas on peut également prévoir un jeu de biellettes en X entre barre et support, les articulations des biellettes au support étant alors mobiles le long du support.

Le store représenté fonctionne de la manière suivante. Le reploiement de la toile s'opère par enroulement de celle-ci au moyen du moteur 5 et à l'encontre des forces qui tendent à ouvrir le compas que forment les deux biellettes 7 et 8 ; le déploiement de la toile s'opère par déverrouillage du cylindre d'enroulement de la toile attelée au moteur 5 et logé dans le boîtier 1 de manière que les biellettes 7 et 8 puissent s'ouvrir en écartant la barre de tirage 3 du boîtier 1 sous l'effet de leur mécanisme moteur qui tend à les déployer.

Selon la caractéristique essentielle de l'invention, l'axe d'articulation 9 de la biellette 7 au support 4, comme illustré à la figure 2, est porté par un pivot 11 monté à pivotement par rapport au support 4 autour d'un axe 12 qui est orthogonal à l'axe d'articulation 9. En outre, le support 4 comporte une came 13 qui vient coopérer avec la biellette 7 en fin de course de déploiement, ce qui engendre des résultats différents selon la position de l'axe 12 et la nature de la came 13.

Sur la figure 1, pour la bonne compréhension du mécanisme général on a placé l'axe 12 non seulement orthogonal à l'axe 9 mais également orthogonal à la barre de tirage 3. Par ailleurs la came 13 est ici une butée fixe.

Ce mode de réalisation est illustré plus en détail aux figures 2 et 3 où l'on retrouve les éléments déjà décrits avec les mêmes références.

On comprend que lorsque la biellette 7 se déploie en tournant autour de l'axe 9 dans le sens trigonométrique, l'ensemble du mécanisme se déploie dans un plan qui contient la barre de tirage 3 et qui est perpendiculaire aux axes 9 et 10. Au moment où la biellette 7 atteint la fin de sa rotation, son extrémité située au-delà de l'axe 9 vient prendre appui sur la butée 13, ce qui tend à faire tourner le pivot 11 autour de son axe 12 dans un sens horaire. Le plan qui contient chacune des biellettes 7 et 8, qui était auparavant commun pour chaque mécanisme de biellettes tourne alors autour de l'axe 12, ce qui entraîne un cintrage de la barre de tirage 3. En effet, pour le mécanisme de biellette représenté à la figure 1, la rotation est celle de la figure 3. Le mécanisme de biellettes non représenté à la figure 1 tourne dans un sens opposé à celui de la figure 3, les plans de chacun des mécanismes de biellettes formant alors une sorte de dièdre. Cette rotation s'opère lorsque les biellettes 7 et 8 sont quasiment dans l'alignement l'une de l'autre. Bien entendu les articulations des biellettes entre elles et celles du mécanisme au pivot et à la barre de tirage 3 sont de rigidité suffisante pour transmettre leur mouvement à l'extrémité de la barre de tirage 3, qui, bien entendu, sera souple et flexible dans un sens perpendiculaire à la surface de la toile.

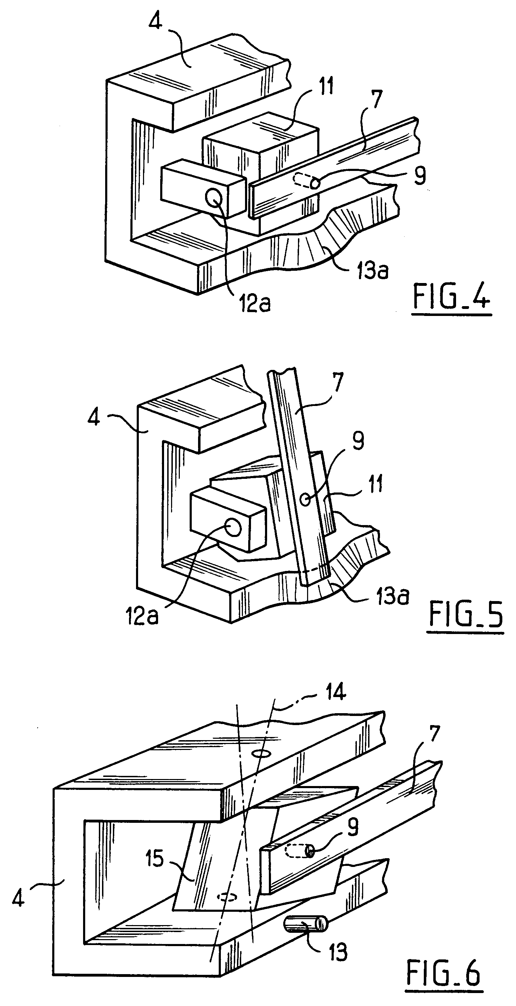

Aux figures 4 et 5 on retrouve certains des éléments déjà décrits avec les mêmes références. Dans ce mode de réalisation le pivot 11 est monté à pivotement par rapport au support 4 autour d'un axe 12a qui, orthogonal à l'axe 9 est sensiblement parallèle à la barre de tirage. La came 13a est une rampe qui, en fin de déploiement de la biellette 7, est parcourue par l'extrémité de cette biellette, ce qui force le pivotement du pivot 11 autour de l'axe 12a. On provoque ainsi le basculement de l'ensemble du plan du store autour de l'axe 12a pour, par exemple, porter la barre de tirage au contact de la baie.

La rampe 13a, comme la butée 13, pourrait être portée par le support 4 de manière à coopérer avec une partie de la biellette 7 autre que son extrémité.

A la figure 6, on notera que l'axe 14 de pivotement du pivot 15 qui porte l'axe 9 n'est ni, comme dans les figures précédentes, sensiblement orthogonal à la barre de tirage 3 ni parallèle à celle-ci mais est incliné par rapport à celle-ci. Les axes 14 de chacun des pivots 15 des mécanismes de biellettes sont supposés convergents vers la barre de tirage 3. On comprend donc que lorsque la biellette 7 de chaque mécanisme prend appui sur la butée 13, la rotation du pivot 15 que cet appui entraîne, associée à la poursuite du déploiement des biellettes 7 et 8, s'opère autour d'un axe 14 qui induit non seulement un cintrage de la barre 3 mais également un déplacement global de cette barre qui s'écarte donc du plan dans lequel elle avait évolué jusqu'au contact entre la biellette 7 et la butée 13. On peut ainsi obtenir un mouvement de la barre 3 en direction par exemple de la baie à occulter sur laquelle elle viendra prendre appui dans la toute dernière phase du déploiement du store, en même temps que son cintrage.

L'invention trouve également des applications dans les mécanismes de déploiement de store autres que celui auquel la description ci-dessus s'est référée. On mentionnera par exemple les mécanismes dans lesquels le déploiement de la toile est obtenu par deux biellettes articulées à la barre de tirage et dont le pied est monté coulissant sur le support. Lorsqu'on rapproche les pieds des biellettes on enroule le store (sur un rouleau à rappel d'enroulement) ; lorsqu'on éloigne les pieds l'un de l'autre, on déploie le store.

Il est donc tout à fait envisageable de prévoir des supports 4 qui soient montés coulissants dans un rail fixe et qui comportent les moyens de l'invention. Dans le cas des figures 4 et 5 l'axe 12a pourrait simplement être formé par une vis (une vis à pas contraire serait prévue pour l'autre biellette du store) le pivot 11 serait alors un écrou qui, au voisinage de la came 13a, alors qu les biellettes 7 sont en fin de déploiement, forcerait le pied de biellette à glisser sur cette came pour modifier l'inclinaison du store. On pourrait de cette façon appliquer l'invention à des biellettes motorisées.

## Revendications

1. Store pare-soleil, comportant une toile (2) enroulée autour d'un cylindre (5a) de rangement et possédant une extrémité libre équipée d'une barre de tirage (3), reliée à un support (4) par au moins un mécanisme (6) à biellettes (7,8) déployables, articulé entre le support (4) et la barre de tirage (3) pour un déploiement de la toile (2) dans une surface sensiblement plane chaque mécanisme (6) comportant une biellette (7) articulée au support (4), la barre de tirage (3) étant maintenue parallèle à elle même, caractérisé en ce que ladite biellette (7) est articulée audit support (4) au moyen d'un pivot (11,15) qui porte l'axe d'articulation (9) de la biellette (7) et qui est porté à pivotement par le support (4) autour d'un axe (12, 12a, 14) orthogonal à l'axe d'articulation (9), le support comportant une butée fixe (13, 13a) sur laquelle la biellette (7) prend appui pour entraîner en pivotement le pivot (11,15) autour de son axe (12, 12a, 14) lors de la phase finale de déploiement du store et modifier l'orientation de la biellette (7) par rapport au plan de déploiement du store.

2. Store selon la revendication 1, caractérisé en ce que l'axe (12a) du pivot (11) est parallèle à la barre de tirage et la butée fixe est une rampe d'appui (13a) qui est parcourue par l'extrémité de la biellette (7).

3. Store selon la revendication 1, caractérisé en ce que l'axe (12) du pivot (11) est orthogonal à la barre de tirage (3) et la barre de tirage est élastiquement déformable dans une direction perpendiculaire à la toile.

4. Store selon la revendication 1, caractérisé en ce que l'axe (14) du pivot (15) est incliné par rapport à la barre de tirage (3) et la barre de tirage est élastiquement déformable dans une direction perpendiculaire à la toile.

## Claims

1. Sunblind, comprising a sheet (2) rolled around a storage cylinder (5a) and having a free end fitted with a draw bar (3), connected to a support (4) by at least one mechanism (6) with linkages (7, 8) which can be extended, articulated between the support (4) and the draw bar (3) for extending the sheet (2) in a substantially plane surface, each mechanism (6) comprising a linkage (7) articulated to the support (4), the draw bar (3) being kept parallel to itself, characterized in that the said linkage (7) is articulated to the said support (4) by means of a pivot (11, 15) which carries the articulating axis (9) of the linkage (7) and which is carried pivotingly by the support (4) about an axis (12, 12a, 14) at right angles to the axis of articulation (9), the support comprising a fixed stop (13, 13a) on which the linkage (7) rests so as to drive the pivot (11, 15) pivotingly about its axis (12, 12a, 14) during the final extension phase of the blind and so as to change the direction of the linkage (7) with respect to the plane of extension of the blind.

2. Blind according to claim 1, characterized in that the axis (12a) of the pivot (11) is parallel to the draw bar and the fixed stop is a supporting ramp (13a) which is traversed by the end of the linkage (7).

3. Blind according to claim 1, characterized in that the axis (12) of the pivot (11) is at right angles to the draw bar (3) and the draw bar is elastically deformable in a direction perpendicular to the sheet.

4. Blind according to claim 1, characterized in that the axis (14) of the pivot (15) is inclined with respect to the draw bar (3) and the draw bar is elastically deformable in a direction perpendicular to the sheet.

## Patentansprüche

1. Sonnenschutz-Store, mit einem um einen Wickelzylinder (5a) gewickelten Tuch mit einem freien Ende, das mit einer Zugstange (3) versehen ist, die über mindestens einen Mechanismus (6) mit ausfaltbaren Schwungstangen (7, 8) mit einem Tragorgan (4) verbunden ist, wobei der Mechanismus zwischen dem Tragorgan (4) und der Zugstange (3) schwenkbar angebracht ist, um das Tuch (2) in einer in etwa ebenen Fläche zu entfalten, wobei jeder Mechanismus (6) eine am Tragorgan (4) angelenkte Schwungstange (7) umfaßt, wobei die Zugstange (3) parallel zu sich selbst bewegt wird,
dadurch gekennzeichnet, daß die Schwungstange (7) mit dem Tragorgan (4) mittels eines Gelenks (11, 15) verbunden ist, das die Schwenkachse (9) der Schwungstange (7) trägt und selbst am Tragorgan (4) um eine Achse (12, 12a, 14) schwenkbar gehalten wird, welche senkrecht zur Schwenkachse (9) steht, wobei das Tragorgan einen festen Anschlag (13, 13a) aufweist, gegen den die Schwungstange (7) zur Anlage kommt, um das Gelenk (11, 15) in eine Schwenkbewegung um seine Achse (12, 12a, 14) am Ende einer Ausfaltbewegung des Stores mitzunehmen und um die Orientierung der Schwungstange (7) gegenüber der Entfaltungsfläche des Stores zu ändern.

2. Sonnenschutzrolle gemäß Anspruch 1,
dadurch gekennzeichnet, daß die Achse (12a) des Gelenkes (11) parallel zur Zugstange verläuft, und daß der feste Anschlag einen Ansatz (13a) bildet, an dem das Ende der Schwungstange (7) vorbeiläuft.

3. Sonnenschutzrolle gemäß Anspruch 1,
dadurch gekennzeichnet, daß die Achse (12) des Gelenkes (11) senkrecht zur Zugstange (3) verläuft und, daß die Zugstange in einer zum Tuch senkrechten Richtung elastisch verformbar ist.

4. Sonnenschutzrolle gemäß Anspruch 1,
dadurch gekennzeichnet, daß die Achse (14) des Gelenkes (15) gegenüber der Zugstange (3) geneigt ist und, daß die Zugstange in einer zum Tuch senkrechten Richtung elastisch verformbar ist.
